Europäisches Patentamt

European Patent Office

Office européen des brevets

(19)

(11) Numéro de publication : **0 407 313 B1**

(12) **FASCICULE DE BREVET EUROPEEN**

(45) Date de publication du fascicule du brevet :
**23.03.94 Bulletin 94/12**

(21) Numéro de dépôt : **90420312.2**

(22) Date de dépôt : **04.07.90**

(51) Int. Cl.⁵ : $B21D\ 22/20$, $B21D\ 51/26$, $C10M\ 111/00$

(54) **Procédé d'obtention de matériaux multicouches aptes à être transformés par emboutissage ou emboutissage-étirage en corps creux.**

(30) Priorité : **06.07.89 FR 8909452**

(43) Date de publication de la demande :
**09.01.91 Bulletin 91/02**

(45) Mention de la délivrance du brevet :
**23.03.94 Bulletin 94/12**

(84) Etats contractants désignés :
**AT BE CH DE DK ES GB GR IT LI LU NL SE**

(56) Documents cités :
**EP-A- 0 001 198**
**EP-A- 0 192 329**
**WO-A-81/03293**
**DE-A- 2 263 586**
**FR-A- 2 416 747**
**GB-A- 872 581**
**GB-A- 1 533 057**
**GB-A- 2 003 415**

(56) Documents cités :
**US-A- 2 530 838**
**US-A- 3 832 962**
**JAPANESE PATENTS REPORT, vol. 77, no. 26,
29 juillet 1977, section J7-H,Derwent Publications Ltd, Londres, GB; & JP-B-77 023 641
(NIHON KOSAKUYU) 25-06-1977**

(73) Titulaire : **PECHINEY RHENALU
6, place de l'Iris Tour Manhattan LA DEFENSE 2
F-92400 COURBEVOIE (FR)**

(72) Inventeur : **Layre, René
12, rue P. Doumer
F-38100 Grenoble (FR)**
Inventeur : **Bosc, Richard
371, rue Jean Moulin
F-38340 Voreppe (FR)**

(74) Mandataire : **Vanlaer, Marcel et al
PECHINEY 28, rue de Bonnel
F-69433 Lyon Cédex 3 (FR)**

EP 0 407 313 B1

## Description

L'invention est relative à un procédé d'obtention de matériaux multicouches aptes à être transformés par emboutissage ou emboutissage-étirage en corps creux pouvant avoir un rapport hauteur/diamètre supérieur à 2,5.

Il est connu par le brevet GB-A-2003415 un procédé selon le préambule de la revendication 1.

Ce procédé comporte les étapes suivantes :

"- mettre en oeuvre un matériau multicouches comportant un film plastique et une couche de résine adhésive sur l'une au moins des faces d'une feuille métallique;
- préparer une ébauche à partir de ce matériau;
- appliquer un poinçon sur cette ébauche à travers plusieurs matrices d'emboutissage-étirage pour former un objet cylindrique allongé dont les parois ont une épaisseur réduite par rapport à l'épaisseur initiale de l'ébauche;
- séparer l'objet du poinçon;
ce matériau multicouche étant capable de résister à l'emboutissage-étirage sans décomposition ou décohésion".

En ce qui concerne la dernière étape, il est évident que la capacité du matériau à résister à la déformation imposée par l'opération d'emboutissage-étirage et à ne présenter ni décohésion, ni décomposition n'est pas illimitée et dépendra du taux de déformation, taux qui s'exprime généralement par le rapport : hauteur de l'objet obtenu sur son diamètre (H/D).

Si l'on se réfère au GB-A- 2003415 et plus particulièrement à l'exemple qu'il contient, on peut lire qu'on obtient des boîtes ayant une hauteur de 127 mm pour un diamètre de 66,3 mm soit un rapport H/D voisin de 1.9 mais aucune allusion n'est faite à l'application de rapports plus élevés.

De fait, la demanderesse s'intéressant à la fabrication par emboutissage-étirage notamment de boîtiers aérosols pour lesquels le rapport H/D est compris entre 3 et 4 a constaté qu'il se produisait des décohésions et des dégradations notamment sur la face externe de l'embauche quand elle mettait en oeuvre les matériaux multicouches de l'art antérieur et qu'il en résultait alors une mise à nu par endroits du substrat métallique avec toutes les conséquences néfastes qui en découlent à savoir l'action corrosive de l'atmosphère sur le substrat et une atteinte à l'aspect esthétique du boîtier.

D'où les recherches entreprises pour trouver une solution à ce problème de tenue et dont l'aboutissement est matérialisé par la présente invention qui consiste en un procédé d'obtention de matériaux multicouches aptes à être transformés au moyen d'outillages d'emboutissage ou d'emboutissage-étirage en corps creux pouvant avoir un rapport hauteur/diamètre supérieur à 2,5, dans lequel on met en ouevre des matériaux matériaux comportant un substrat en alliage d'aluminium avant subi un traitement de surface et recouvert sur l'une de ses faces d'un film en matière plastique et sur l'autre face d'une couche de vernis contenant un lubrifiant solide sous forme de particules plus dures que le vernis et moins dures que l'outillage, caractérisé en ce que le rapport du diamètre moyen des dites particules à l'épaisseur du vernis sec après cuisson est supérieur à 1.

Ainsi, l'invention a pour particularité dans le cadre d'un matériau multicouche comportant un substrat métallique revêtu sur ses deux faces de produits organiques, d'utiliser un vernis auquel a été mélangé des particules de lubrifiant solides de taille particulière. Ce vernis qui va constituer la surface externe du produit embouti possède en effet la propriété surprenante en raison de l'affleurement de certaines de ces particules de jouer le rôle d'auto-lubrifiant de sorte qu'il est possible de supprimer toute utilisation de lubrifiant classique gras et visqueux lors de l'emboutissage et de l'étirage et de le remplacer par de l'eau. Cette eau sert en même temps à refroidir l'outillage et à évacuer les particules solides qui pourraient éventuellement se détacher pendant l'opération. La présence d'un agent tensioactif dans cette eau peut dans certains cas favoriser les opérations de transformation. Ces agents peuvent être anioniques, cationiques ou neutres à base d'oxyde d'éthylène et sont utilisés en quantités comprises entre 0,01 et 3% en poids par rapport à l'eau et de préférence entre 0,05 et 0,5% de façon à abaisser la tension superficielle de l'eau au-dessous de 30 10-3 N.m-1. Les tensioactifs comportant des chaînes ou groupement fluorés, tels que ceux vendus par la société ATOCHEM sous la marque déposée "FORAFAC" sont particulièrement efficaces.

La suppression du lubrifiant traditionnel a des conséquences importantes sur l'économie de la fabrication de corps creux car d'une part l'eau est moins chère, d'autre part les objets n'ont plus à être dégraissés avant utilisation. Par ailleurs, on évite ces opérations de récupération desdits lubrifiants et les problèmes de pollution qu'ils peuvent entraîner.

Il est évident que les moyens de l'invention, s'ils conviennent particulièrement dans le cas où le rapport H/D est supérieur à 2,5 améliorent aussiconsidérablement les conditions d'emboutissage de corps creux pour lesquels le rapport H/D est plus bas.

Les particules mises en oeuvre dans le procédé sont constituées par un lubrifiant solide, micronisé, insoluble ou peu soluble dans le vernis, ayant un point de ramollissement supérieur à 60°C et une dureté plus gran-

2

de que le vernis tout en étant inférieure à celle de l'outillage.

Ce lubrifiant peut être choisi de préférence dans le groupe formé par les matières plastiques telles que le polyéthylène, le polypropylène, le polytétrafluoréthylène ou des matières organiques non polymérisées telles que les amides d'acides gras; ledit lubrifiant pouvant être un mélange de particules différant par la taille et/ou par la composition chimique.

De préférence, les particules solides sont choisies dans la gamme de diamètre moyen compris entre 1 et 30 μm, mais les résultats les meilleurs sont observés dans la fourchette 10-20 μm; on entend ici par diamètre moyen, la moyenne des plus grandes dimensions des particules qui ne sont pas nécessairement sphériques. Il est néanmoins préférable que le rapport du diamètre moyen sur l'épaisseur du vernis soit supérieur à 1 et inférieur à 10 afin que lesdites particules puissent affleurer et venir au contact de l'outillage afin d'exercer au mieux leur fonction lubrifiante. De préférence, le rapport est compris entre 4 et 10.

De préférence également, la teneur en particules du vernis est comprise entre 0,1 et 10% en poids par rapport au vernis sec mais les conditions optima de lubrification correspondent à la fourchette 0,5-5%.

En ce qui concerne le vernis lui-même, la demanderesse a trouvé qu'il était possible d'utiliser les vernis habituellement mis en oeuvre dans la fabrication de corps creux pour l'emballage, tels que les vernis époxy-phénoliques, époxy-urée, organosol, vinylique, polyester, avec de préférence une épaisseur de vernis sec sur le substrat en Al comprise entre 1 et 8 μm et de préférence entre 2 et 5 μm.

Le vernis peut contenir, outre le lubrifiant solide, d'autres charges telles que des matières colorantes, par exemple 1 à 5% de pigment blanc à base d'oxyde de titane, cette limitation à moins de 5% étant faite alors pour ne pas compromettre la ductilité du vernis additionné de pigment.

La cuisson de la couche de vernis chargé de lubrifiant solide est effectuée dans des conditions habituelles de température et de durée, généralement entre 120 et 250° pour des durées pouvant aller de 15 secondes à 15 minutes, permettant la cuisson totale et le développement de l'adhérence maximum.

En ce qui concerne le substrat métallique en alliage d'aluminium, il est constitué par tout alliage habituellement utilisé dans le domaine des corps creux pour l'emballage tels que boîtiers aérosols, boîtes pour l'industrie agroalimentaire, capsules de bouchage.

Des alliages de la série 3000, par exemple le 3004, ceux de la série 5000, par exemple le 5052, conviennent bien (ces désignations correspondent aux normes de l'Aluminium Association). Mais il est évident qu'en raison des propriétés particulières du vernis mis en oeuvre, les phénomènes d'arrachement de surface encore appelés "galling" qui se produisent lors de l'emboutissage-étirage deviennent beaucoup moins fréquents et qu'on peut recourir à des alliages autres que ceux qui viennent d'être décrits.

Cependant, pour répondre au mieux aux difficiles conditions de mise en forme auquel est soumis le matériau multicouches, le métal constituant le substrat subit généralement un traitement de surface avant revêtement.

Parmi ces traitements, on peut citer l'anodisation et de préférence celle qui est réalisée dans des conditions où on développe des épaisseurs d'oxyde comprises entre 30 et 80nm, l'optimum étant compris entre 30 et 50 nm pour réaliser au mieux les fonctions d'accrochage avec les revêtements et notamment le vernis contenant le lubrifiant.

L'anodisation en milieu phosphorique convient particulièrement bien dans le cadre de l'invention.

De même, la conversion chimique telle que celle développant de préférence des épaisseurs de revêtement comprises entre 20 et 60 nm et en particulier utilisant un milieu phosphochromique s'est montrée particulièrement apte à procurer au substrat les propriétés d'adhérence souhaitées vis à vis des différents revêtements et notamment du vernis contenant le lubrifiant.

En ce qui concerne le film de matière plastique qui revêt le substrat du côté opposé à la couche de vernis et qui formera la face externe du produit embouti, il est parfaitement adhérent comme le vernis au substrat en alliage d'Al grâce à la présence de couches d'oxyde anodique ou de conversion chimique. Ce film reste étanche pendant les déformations et jouera le rôle de barrière vis à vis de toute matière éventuellement agressive vis à vis de l'aluminium et placée à son contact, de sorte que l'opération de vernissage de ce film peut être supprimée. Le film de matière plastique évite tout grippage de l'outillage d'emboutissage et permet en combinaison avec les propriétés du vernis extérieur, d'atteindre des rapports de déformation particulièrement élevés.

Ce film a une épaisseur comprise entre 15 et 100 μm et de préférence entre 30 et 60 μm et un taux d'allongement supérieur à 200% dans toutes les directions (sens long et travers).

Plusieurs types de film peuvent être mis en oeuvre. Suivant un premier type, on utilise une polyoléfine telle que le polyéthylène (PE) en particulier le PE-HD ou le polypropylène (PP) ou un copolymère de PE ou de PP soit seul, soit avec une autre oléfine. Dans ce cas, on utilise un adhésif pour faire adhérer le film au substrat. Cette polyoléfine peut contenir des additifs ou des charges habituellement choisies pour donner un aspect particulier au produit embouti tels que des colorants ou des pigments ou pour conférer des propriétés tribologiques tels que par exemple 0,1 à 0,5% en poids d'éthylène bistéaramide.

3

Suivant un deuxième type, le film est un mélange d'au moins 50% en poids de polyélofine et d'au plus 50% en poids de copolymère acide et l'adhésif est un mélange en général extrudable d'au moins 50% en poids d'un copolymère acide et d'au plus 50% en poids de polyoléfine. Le film et l'adhésif sont de préférence appliqués sur le substrat par un procédé de coextrusion plutôt que par extrusion couche par couche. Cette coextrusion permet également l'incorporation d'additifs ou de charges.

Suivant un troisième type, on applique par calandrage un film de polyéthylène de préférence un polyèthylène linéaire de basse densité.

Les produits ambiants peuvent ensuite être soumis à des étapes de décoration par impression ou autre étape de finition.

L'invention sera mieux comprise à l'aide des planches de dessins qui représentent :

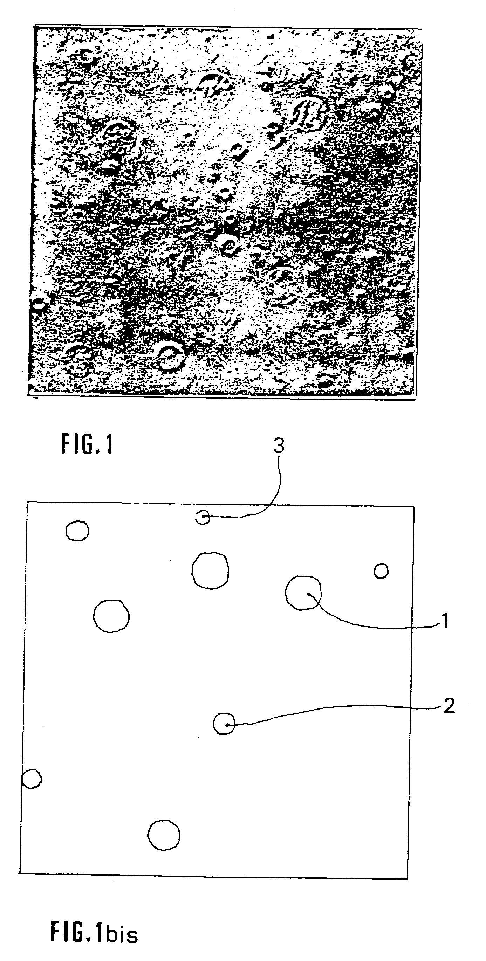

. fig. 1 une photographie à un grossissement 500 de la couche de vernis avant emboutissage.

. fig. 1bis un schéma de la fig.1

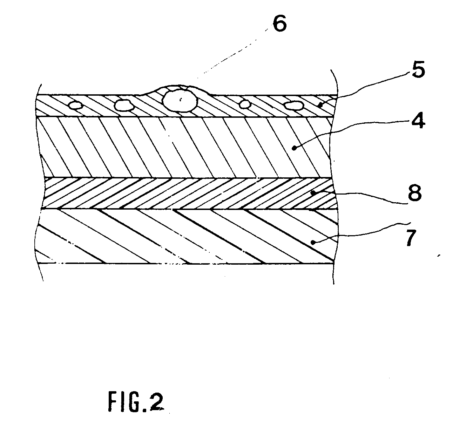

. fig. 2 une coupe d'un matériau multicouche

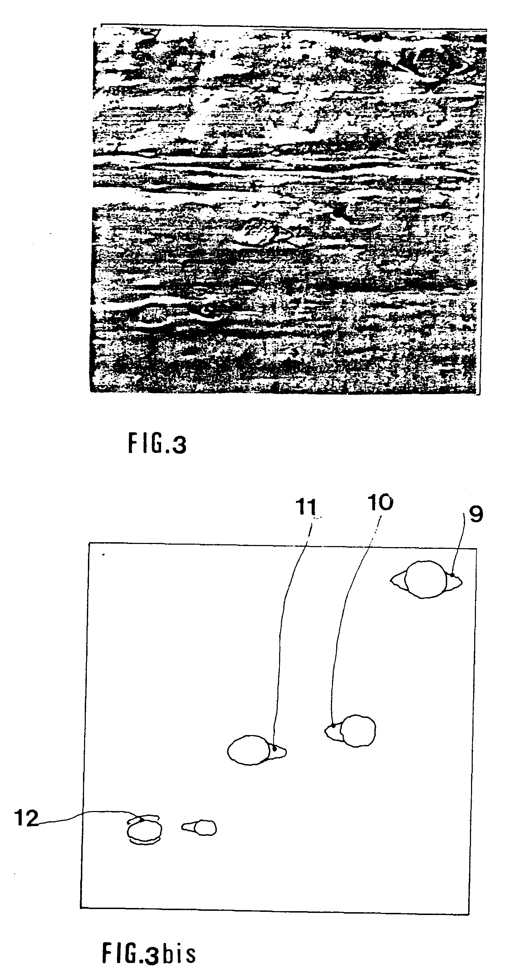

. fig. 3 une photographie identique à celle de la fig.1 mais où la couche de vernis a été soumise à l'emboutissage

. fig.3bis un schéma de la fig.3

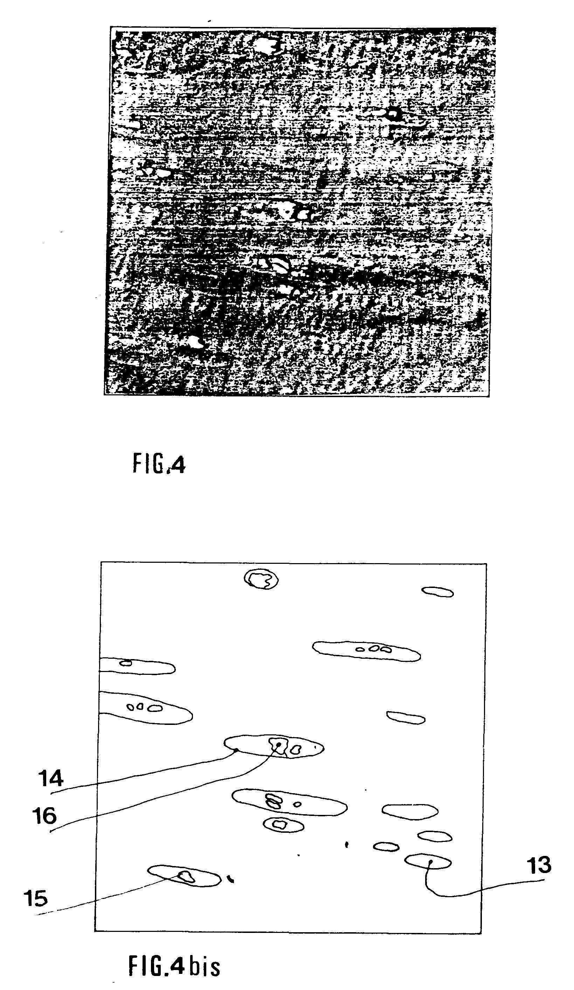

. fig.4 une photographie identique à celle de la fig.1 de la couche de vernis après emboutissage-étirage

. fig.4bis un schéma de la fig.4.

Plus précisément, sur les figures 1 et 1bis, on distingue un grand nombre de bosses ou de protubérances généralement circulaires par exemple les protubérances 1,2 et 3 de diamètres respectifs 16,10 et 6 µm formant de légers reliefs à la surface du vernis et correspondant aux particules de lubrifiant solide.

Sur la figure 2, on voit un substrat 4 en alliage d'aluminium anodisé sur ses deux faces, une couche de vernis 5 contenant des particules 6 de lubrifiant solide, un film 7 de matière plastique composé d'un mélange pondéral à 85% de copolymère acide à base d'éthylène acide acrylique et de 15% de polyéthylène haute densité lié au substrat par un épaisseur d'adhésif 8.

Sur les figures 3 et 3 bis, on constate que les particules de lubrifiant solide sont toujours présentes d'après les protubérances 9,10,11,12 et qu'elles ont été peu ou pas déformées par l'emboutissage. On note cependant une décohésion entre vernis et particule à l'avant et/ou à l'arrière de certaines particules plus grosses. Cette décohésion laisse des traces orientées suivant la direction de l'emboutissage.

Sur les figures 4, on voit qu'à l'issue de l'étirage la totalité des particules de lubrifiant solide a disparu et qu'elles ont laissé des traces 13,14,15 en creux sous forme d'ellipses très allongées et de dimensions diverses. Mais on observe aussi que le vernis bien que d'épaisseur finale très faible est resté adhérent au substrat.

Cependant, au centre de certaines traces apparaissent de petites zones 16 représentant moins de 1% de la surface totale où le métal est à nu; ces zones semblent correspondre à des zones de contact des plus grosses particules avec le métal et qui sont découvertes par l'effet d'arrachement.

Ainsi, les particules de lubrifiant solide se comportent comme des particules lubrifiantes "sacrificielles" qui sont progressivement éliminées lors de l'étirage : les plus grosses d'abord et les plus petites à la fin de l'opération.

L'invention peut être illustrée à l'aide de l'exemple d'application suivant qui se réfère aux figures précédentes.

## Préparation du substrat en alliage d'aluminium

Une bande en alliage d'aluminium 3004 à l'état H19 et ayant une épaisseur de 500 µm a été soumise sur ses deux faces à un dégraissage en présence d'acide phosphorique suivi d'une oxydation anodique phosphorique conduisant à une couche d'oxyde d'épaisseur 60 nm.

## Préparation du matériau multicouches

1. Dans un premier temps, vernissage de la face de la bande Al (4) destinée à devenir la face externe du produit embouti puis application par enduction sur une des deux faces de la bande Al d'un mélange de vernis de type acrylique (vernis n° 326412 de chez HOLDEN) et de 1,5% en poids de lubrifiant solide consistant en un mélange de particules (6) PE/PTFE de taille ou diamètre moyen de 2,5 µm avec un maximum de 9 µm (référence TF/1778 de LANGER & CO) de façon à former, après cuisson complète du vernis 12 min. à 180°C, une couche de vernis sec (5) d'épaisseur 2 µm.

Typiquement, la cuisson est réalisée entre 160 et 260°C et avec des durées allant de 15 s à 15 min, la cuisson à haute température associée à une durée courte nécessitant un traitement continu de la bande d'Al dans un four à bande, alors que la cuisson à plus basse température associée à une durée plus longue suppose en général le découpage préalable de la bande en portions de bande appelées formats.

l'examen au M.E.B. (microscopie électronique à balayage) de la surface de vernis ici obtenue correspond aux figures 1 et 1 bis.

2. Dans un deuxième temps, on a revêtu l'autre face de la bande d'Al (4) déjà revêtue de vernis (5) d'un film de PP (polypropylène)(7) obtenant ainsi une bande multicouches selon l'invention (fig.2). Pour cela on a appliqué par enduction une couche d'adhésif (8) en polyuréthane de 3 μm, référence 3640 de chez HENKEL, sur l'autre face de la bande Al préchauffée vers 60°C. Après évaporation des solvants, on a appliqué le film (7) de PP de qualité "cast", d'épaisseur 50 μm et d'allongement 400 à 600% dans toutes les directions par calandrage, en faisant circuler entre deux rouleaux la bande Al ainsi revêtue et le film de PP de façon à faire adhérer par pression le film PP à la couche d'adhésif. Un des deux rouleaux est chauffé, l'autre, en contact avec le film PP est revêtu de PTFE, n'adhérant pas au PP ou au PE même fondu.

On a obtenu ainsi un matériau multicouches sous forme de bande qui a été mis sous forme d'un corps creux ayant 47 mm de diamètre (D) et 160 mm de hauteur (H), soit un rapport H/D de 3,4.

La mise en forme de la bande multicouche a comporté une première étape d'emboutissage suivie d'une deuxième phase d'étirage, selon la gamme suivante :

| OPERATION | D (Diamètre) | H (hauteur) | EPAISSEUR DE JUPE | H / D |
|---|---|---|---|---|
| EMBOUTISSAGE | | | | |
| -découpe d'un flan circu- laire | 127 mm | - | - | - |
| -1ère passe | 65 mm | 45 mm | 0,55 mm | 0,7 |
| -2° passe | 47,6 mm | 77 mm | 0,55 mm | 1,6 |
| ETIRAGE | | | | |
| -1ère bague | 47,4 mm | 100 mm | 0,40 mm | 2,1 |
| -2ème bague | 47,3 mm | 115 mm | 0,35 mm | 2,4 |
| -3ème bague | 47,0 mm | 160 mm | 0,25 mm | 3,4 |
| - mise à lon- gueur uni- forme | | | | |

Cette mise en forme pourrait être réalisée, en continu, à partir de la bande multicouches elle-même ou après découpage de celle-ci en portions de bandes ou formats.

L'étirage a été réalisé sous aspersion d'eau additionnée de 0,1% en poids d'agent tensio-actif FORAFAC (marque déposée), de manière à ce que l' eau mouille en particulier la surface externe de la cup obtenue après emboutissage, dans le triple but de refroidir les bagues d'étirage, de réduire les risques d'endommagement des surfaces internes et externes du corps creux, et d'éliminer les souillures éventuelles ou les résidus tels que les particules de lubrifiant solide qui ont été arrachées pendant l'étirage.

A l'examen visuel, la surface interne présente un aspect uniforme.

Des tests de conductivité électrique, dits "test WACO", qui permettent de mesurer le degré d'endommagement d'un revêtement intérieur en mesurant à tension constante, l'intensité de courant passant entre un corps creux métallique et son contenu à base de solution saline, ont été effectués sur des échantillons en fin d'emboutissage et après chaque passe d'étirage (Tableau I) :

| Corps creux D x H | Hauteur de remplissage (en solution NaCl à 20%) | Intensité (sous 6,3 Volts) |
|---|---|---|
| 47,6 x 77 | 50 mm | 0 mA |
| 47,4 x100 | 80 mm | 0 mA |
| 47,3 x100 | 80 mm | 0,5 mA |
| 47 x160 | 120 mm | 1 mA |

Compte tenu des surfaces testées, on considère comme acceptable des valeurs d'intensité inférieures à 5 mA.

Les valeurs d'intensité obtenues illustrent bien la faible porosité obtenue après la mise en forme, de sorte que, telle quelle, cette surface interne est adaptée au conditionnement de produits même agressifs, sans nécessiter un traitement complémentaire.

Le procédé trouve son application dans la fabrication de matériaux destinés à la confection de corps creux ou de récipients dont le rapport hauteur/diamètre est supérieur à 2,5.

## Revendications

1. Procédé d'obtention de matériaux multicouches aptes à être transformés au moyen d'outillages d'emboutissage ou d'emboutissage-étirage en corps creux pouvant avoir un rapport hauteur/diamètre supérieur à 2,5, dans lequel on met en oeuvre des matériaux comportant un substrat (4) en alliage d'aluminium ayant subi un traitement de surface et recouvert sur l'une se ses faces d'un film (7) en matière plastique et sur l'autre face d'une couche de vernis (5) contenant un lubrifiant solide sous forme de particules (6) plus dures que le vernis et moins dures que l'outillage caractérisé en ce que le rapport du diamètre moyen des dites particules à l'épaisseur du vernis sec après cuisson est supérieur à 1.

2. Procédé selon la revendication 1 caractérisé en ce que le lubrifiant solide est constitué de particules appartenant au groupe constitué par le polyéthylène, le polypropylène, le polytétrafluoréthylène, les amides et leurs mélanges.

3. Procédé selon la revendication 1 caractérisé en ce que le rapport diamètre moyen des particules de lubrifiant solide/épaisseur du vernis sec après cuisson est supérieur à 1 et inférieur à 10.

4. Procédé selon la revendication 1 caractérisé en ce que les particules ont un diamètre moyen compris entre 1 et 30 μm.

5. Procédé selon la revendication 1 caractérisé en ce que la teneur pondérale en lubrifiant solide dans le vernis sec après cuisson est comprise entre 0,1 et 10% en poids.

6. Procédé selon la revendication 5 caractérisé en ce que la teneur est comprise entre 0,5 et 5%.

7. Procédé selon la revendication 1 caractérisé en ce que le traitement de surface du substrat consiste en une anodisation.

8. Procédé selon la revendication 7 caractérisé en ce que l'anodisation développe une épaisseur d'oxyde comprise entre 30 et 80 nm.

**9.** Procédé selon la revendication 7 caractérisé en ce que l'anodisation est réalisée en milieu phosphorique.

**10.** Procédé selon la revendication 1 caractérisé en ce que le traitement de surface du substrat consiste en une conversion chimique.

**11.** Procédé selon la revendication 10 caractérisé en ce que la conversion chimique développe une épaisseur de revêtement comprise entre 20 et 60 nm.

**12.** Procédé selon la revendication 10 caractérisé en ce que la conversion est réalisée en milieu phosphochromique.

**13.** Procédé selon la revendication 1 caractérisé en ce que la couche de vernis a une épaisseur comprise entre 1 et 8 μm.

**14.** Procédé selon la revendication 13 caractérisé en ce que la couche de vernis a une épaisseur comprise entre 2 et 5 μm.

**15.** Procédé selon la revendication 12 caractérisé en ce que la composition du vernis appartient au groupe constitué par les acrylique, époxy-urée, les organosol vinylique, les époxy-phénoliques, les polyesters.

**16.** Procédé selon la revendication 1 caractérisé en ce que lors de déformations, la couche de vernis occupe la face externe du produit obtenu.

**17.** Procédé selon la revendication 1 caractérisé en ce que le film est en matière plastique et a une épaisseur comprise entre 15 et 100 μm et un taux d'allongement supérieur à 200% dans toutes les directions.

**18.** Procédé selon la revendication 17 caractérisé en ce que le film a une épaisseur comprise entre 30 et 60 μm.

**19.** Procédé selon la revendication 1, caractérisé en ce que le film en matière plastique est une polyoléfine.

**Claims**

**1.** Process for obtaining multilayer materials which can be transformed by drawing or drawing and ironing tools into hollow bodies which can have a height to diameter ratio exceeding 2.5, said materials having an aluminium alloy substrate (4) which has undergone a surface treatment and whereof one of its faces is covered with a plastics material film (7) and the other face is covered with a varnish coating (5) containing a solid lubricant in the form of particles (6) which are harder than the varnish and less hard than the tools, characterized in that the ratio of the mean diameter of the solid lubricant particles to the thickness of the dry varnish after baking exceeds 1.

**2.** Process according to claim 1, characterized in that the solid lubricant is constituted by particles belonging to the group formed by polyethylene, polypropylene, polytetrafluorethylene, amides and mixtures thereof.

**3.** Process according to claim 1, characterized in that the ratio of the mean diameter of the solid lubricant particles to the thickness of the dry varnish after baking it above 1 and below 10.

**4.** Process according to claim 1, characterized in that the particles have a mean diameter between 1 and 30 μm.

**5.** Process according to claim 1, characterized in that the weight content of solid lubricant in the dry varnish after baking is between 0.1 and 10% by weight.

**6.** Process according to claim 5, characterized in that the content is between 0.5 and 5%.

**7.** Process according to claim 1, characterized in that the surface treatment of the substrate consists of an anodization.

**8.** Process according to claim 7, characterized in that the anodization develops an oxide thickness between

EP 0 407 313 B1

30 and 80 nm.

9. Process according to claim 7, characterized in that anodization is carried out in a phosphoric medium.

10. Process according to claim 1, characterized in that the substrate surface treatment consists of a chemical conversion.

11. Process according to claim 10, characterized in that the chemical conversion develops a coating thickness between 20 and 60 nm.

12. Process according to claim 10, characterized in that the conversion is carried out in a phosphochromic medium.

13. Process according to claim 1, characterized in that the thickness of the varnish coating is between 1 and 8 $\mu$m.

14. Process according to claim 13, characterized in that the thickness of the varnish coating is between 2 and 5 $\mu$m.

15. Process according to claim 12, characterized in that the composition of the varnish belongs to the group constituted by acrylic, apoxy-urea, vinyl organosol, epoxy-phenolic and polyester varnishes.

16. Process according to claim 1, characterized in that during the deformation, the varnish coating occupies the outer face of the product obtained.

17. Process according to claim 1, characterized in that the film is of a plastics material and has a thickness between 15 and 100 $\mu$m and an elongation level greater than 200% in all directions.

18. Process according to claim 17, characterized in that the film thickness is between 30 and 60 $\mu$m.

19. Process according to claim 1, characterized in that the plastics material film is a polyolefin.


**Patentansprüche**

1. Verfahren zur Herstellung von Mehrschichtmaterialien, die geeignet sind, um mit Hilfe von Tiefzieh- oder Streckziehwerkzeugen in Hohlkörper umgeformt zu werden, die ein Höhen/Durchmesserverhältnis von mehr als 2,5 haben können, bei dem Materialien eingesetzt werden, die ein Substrat (4) aus Aluminiumlegierung umfassen, das eine Oberflächenbehandlung durchlaufen hat und auf einer seiner Seiten mit einem Film (7) aus Kunststoff und auf der anderen Seite mit einer Lackschicht (5) überzogen ist, die einen festen Schmierstoff in Form von Teilchen (6) enthält, die härter als der Lack und weniger hart als das Werkzeug sind,
**dadurch gekennzeichnet,**
daß das Verhältnis von mittlerem Durchmesser der Teilchen zur Dicke der Lackschicht nach Aushärtung größer als 1 ist.

2. Verfahren nach Anspruch 1,
dadurch gekennzeichnet,
daß der feste Schmierstoff aus Teilchen besteht, die zur Gruppe gehören, die aus Polyethylen, Polypropylen, Polytetrafluorethylen, Amiden und ihren Gemischen besteht.

3. Verfahren nach Anspruch 1,
dadurch gekennzeichnet,
daß das Verhältnis von mittlerem Durchmesser der festen Schmierstoffteilchen zur Dicke des Lacks nach Aushärten größer als 1 und kleiner als 10 ist.

4. Verfahren nach Anspruch 1,
dadurch gekennzeichnet,
daß die Teilchen einen mittleren Durchmesser zwischen 1 und 30 $\mu$m haben.

9

5. Verfahren nach Anspruch 1,
dadurch gekennzeichnet,
daß der Gewichtsanteil von festem Schmierstoff im trockenen Lack nach Aushärten zwischen 0,1 und 10 Gew.% liegt.

6. Verfahren nach Anspruch 5,
dadurch gekennzeichnet,
daß der Gehalt zwischen 0,5 und 5 % liegt.

7. Verfahren nach Anspruch 1,
dadurch gekennzeichnet,
daß die Oberflächenbehandlung des Substrats aus einer Eloxierung besteht.

8. Verfahren nach Anspruch 7,
dadurch gekennzeichnet,
daß die Eloxierung eine Oxiddicke zwischen 30 und 80 nm entwickelt.

9. Verfahren nach Anspruch 7,
dadurch gekennzeichnet,
daß die Eloxierung in phosphorhaltigem Medium durchgeführt wird.

10. Verfahren nach Anspruch 1,
dadurch gekennzeichnet,
daß die Oberflächenbehandlung des Substrats aus einer chemischen Umwandlung besteht.

11. Verfahren nach Anspruch 10,
dadurch gekennzeichnet,
daß die chemische Umwandlung eine Überzugsdicke zwischen 20 und 60 nm entwickelt.

12. Verfahren nach Anspruch 10,
dadurch gekennzeichnet,
daß die Umwandlung in phosphorchromhaltigem Medium durchgeführt wird.

13. Verfahren nach Anspruch 1,
dadurch gekennzeichnet,
daß die Lackschicht eine Dicke zwischen 1 und 8 μm hat.

14. Verfahren nach Anspruch 13,
dadurch gekennzeichnet,
daß die Lackschicht eine Dicke zwischen 2 und 5 μm hat.

15. Verfahren nach Anspruch 12,
dadurch gekennzeichnet, daß
die Zusammensetzung des Lacks zur Gruppe bestehend aus Acrylen, Epoxyharnstoffen, Vinylorganosolen, Epoxyphenolen und Polyestern gehört.

16. Verfahren nach Anspruch 1,
dadurch gekennzeichnet,
daß bei den Verformungen die Lackschicht die Außenseite des erhaltenen Produkts belegt.

17. Verfahren nach Anspruch 1,
dadurch gekennzeichnet,
daß der Film aus Kunststoff ist und eine Dicke zwischen 15 und 100 μm und ein Dehnungsverhältnis von mehr als 200 % in alle Richtungen hat.

18. Verfahren nach Anspruch 17,
dadurch gekennzeichnet,
daß der Film eine Dicke zwischen 30 und 60 μm hat.

19. Verfahren nach Anspruch 1,

dadurch gekennzeichnet,
daß der Kunststoffilm ein Polyolefin ist.

FIG.1

FIG.1bis

FIG.2

EP 0 407 313 B1

FIG.3

FIG.3bis

14

FIG.4

14
16
15
13

FIG.4 bis